# EUROPEAN PATENT SPECIFICATION

(11) **EP 1 861 457 B1**
(45) Date of publication and mention of the grant of the patent: **25.02.2015**
(21) Application number: 06725198.3
(22) Date of filing: 21.03.2006
(51) Int. Cl.: C08K 5/00, C08L 95/00, C09K 3/18, C08K 5/20, C08K 5/098

(54) **IMPROVEMENTS IN OR RELATING TO BITUMINOUS MATERIALS**
VERBESSERUNGEN IN ODER IN BEZUG AUF BITUMINÖSE MATERIALIEN
AMÉLIORATIONS AUX METÉRIAUX BITUMINEUX OU EN RELATION AVEC CEUX-CI

(30) Priority: 21.03.2005 EP 05290617
(43) Date of publication of application: 05.12.2007
(73) Proprietor: Shell Internationale Research Maatschappij B.V., 2596 HR Den Haag (NL)
(72) Inventor: KOENDERS, Burgardus Gijsbertus, F-76650 Petit Couronne (FR); SEIVE, Alain Marcel Bernard, F-76650 Petit Couronne (FR); STOKER, Dirk Adriaan, F-76650 France (FR)
(74) Representative: Matthezing, Robert Maarten
(86) International application number: PCT/EP2006/060911
(87) International publication number: WO 2006/100239

(56) References cited:
- WO-A-88/07066
- US-A- 5 364 894
- US-A- 5 843 330
- DATABASE WPI Section Ch, Week 199825 Derwent Publications Ltd., London, GB; Class E16, AN 1998-284693 XP002380857 & RU 2 094 427 C1 (KOLLING STOCK CO) 27 October 1997 (1997-10-27)

## Description

The present invention relates to improvements in or relating to bituminous materials, in particular asphalt.

Asphalt is a mixture of bitumen and aggregates and is widely used in civil engineering applications, for example, as roofing materials and in the construction and maintenance of roads and other surfaces, including pavements and airport runways. It will already be apparent to persons skilled in the art that European terminology is used herein: the bitumen is the binder material and the asphalt is the bitumen/aggregate mix (in US terminology the binder material may be called the asphalt and the mixture, asphalt concrete).

The present invention is most relevant to asphalt surfaces used by vehicles, for example roads and, in particular, runways. Over time the quality of asphalt surfaces of roads and runways deteriorates. This is believed to be at least partly due to the fact that water is absorbed into the asphalt, weakening the asphalt by degrading the bonding between the bitumen and aggregate. The problem is aggravated by the application of de-icer and/or anti-icer in very cold weather. On asphalt road surfaces, sodium chloride is applied in order to melt ice or inhibit its formation. An "osmosis" or "water absorption" effect has been proposed to explain the considerable reduction in asphalt stability when salt is present in/on the asphalt on roads during severe winter conditions. Whatever the mechanism is, the asphalt is

weakened and is more readily damaged, causing the road surface to become uneven.

The problem is particularly acute at airports. It is essential that runway surfaces are very even, and kept free of ice. In some countries temperatures may be sufficiently low in winter that the potential for ice formation persists for several months. Large quantities of de-icer and/or anti-icer may be used during this period.

Preferred de-icer or anti-icer compounds for use in severe conditions and/or for runways are aqueous solutions of metal salts, for example, potassium acetate and potassium formate (sometimes called potassium formiate). These are typically applied as solutions. However, these compounds can have a significant adverse effect on the durability of the asphalt. The loss of durability may be a loss of stability and/or a loss of material; arising from a loss in degree of coating of bitumen around the aggregate particles of the composition which forms the asphalt.

It has been found, surprisingly, that the presence of certain compounds in the bitumen leads to an improvement in the resistance of asphalt to de-icer and/or anti-icer compounds.

In accordance with the present invention there is provided the use of a surfactant to improve the resistance of asphalt to degradation by a de-icer and/or an anti-icer.

Preferably said use is in addition to improve the resistance of said asphalt to degradation by water.

The asphalts treated in the present invention may have a wide range of uses including mastic asphalt paving applications, and in industrial applications. The present invention is particularly suited to the treatment of asphalt surfaces for vehicles routeways, for example roads, airport runways, and car parks. An especially preferred use of the present invention is in the provision of de-icer and/or anti-icer resistant asphalt for airport runways.

Asphalts are essentially mixtures of bitumen, as binder, with aggregate, in particular filler, sand and stones. There are many different types of asphalts available and their characteristics can vary quite significantly. The design of asphalts for bituminous paving application is largely a matter of selecting and proportioning materials to obtain the desired properties in the finished construction.

Asphalts that are used in surface courses must be designed to have sufficient stability and durability to carry the anticipated traffic loads and to withstand the detrimental effects of temperature changes and water. Additional performance-related properties have to be taken into account, in order to produce surface layers which reduce one or more of hydroplaning, noise, fatigue damage and rut formation, and which have good skid resistance.

In evaluating and adjusting mix designs, the aggregate gradation and the binder content in the final mix design must strike a favourable balance between the stability and durability requirements for the intended use. The final goal of mix design is to achieve a balance among all of the desired properties.

Asphalts are often designed as either gap graded or continuously graded. This refers to the constitution of the asphalts in terms of the individual aggregate fractions within mixtures. Size is measured by passing a sample of aggregate through a series of sieves. The fractions are usually divided in filler (size smaller than 63µm or 75µm), sand (size up to 2mm) and stones fractions (e.g. 2 to 4mm, 4 to 6mm, 6 to 8mm, 8 to 11mm, 11 to 14mm). A continuously graded asphalt is one that contains fractions of various sizes throughout the range. A gap graded asphalt is one where sizes are discontinuous.

Continuously graded asphalts (often called "dense" asphalts) usually have an air voids content of 1 to 7%, in particular 4 to 5%. Gap graded asphalts may have higher air voids content. They may be "open" asphalts with a voids content of about 7 to 12%, or "very open" asphalts with a still higher air voids content of 12 to 30%, preferably 22 to 24%.

It will be understood by those skilled in the art that a wide range of aggregate types and size distributions may be employed in the process of the present invention, the type and mix of aggregate varying with the application for which the asphalt is to be used.

Preferably stones comprise at least 10% of the aggregate, more preferably at least 15% and most preferably at least 20%. Preferably stones comprise up to 70% of the aggregate, more preferably up to 65%, most preferably up to 60%. Filler and/or sand constitutes the balance.

The amount of bitumen in the asphalt of the present invention will vary depending on the application for which the asphalt is to be used. However, the asphalt used in the present invention preferably comprises in the range of from 1 to 20% wt of bitumen, more preferably in the range of from 2 to 10% wt, and most preferably in the range from 3 to 7% wt, based on total weight of asphalt.

It is believed that the present invention is of benefit in relation to all types of asphalt, whatever the "mix design" and whatever the voids content, i.e. to "dense", "open" and "very open" asphalts.

Although we do not wish to be bound by theory it is believed that the present invention achieves its beneficial result by helping to maintain the coating of the aggregate by the bitumen.

In use, de-icers and anti-icers are typically applied to asphalt as aqueous solutions, but they can be applied in particulate form, to dissolve *in situ.*

The present invention is particularly, though not exclusively, useful in improving resistance of asphalt to degradation by de-icers and/or anti-icers comprising metal salts, for example delivered to the asphalt as aqueous solutions. Alkali metal salts are conventional de-icers which can cause degradation, especially alkali metal salts of organic compounds, in particular potassium salts, especially potassium salts of organic acids, for example carboxylic acids having in total from 1 to 5 carbon atoms. Most typically such de-icers and/or anti-icers comprise potassium acetate and/or potassium formate.

Typically the de-icers and/or anti-icers against which the present invention provides protection are solutions having a pH of between 7.5 and 13, for example between 8 and 12, for example between 9 and 11.

The bitumen may be a residue from the distillation of crude oil, a cracked residue, naturally occurring bitumen or a blend of various bitumen types. Examples of bitumen that may be conveniently used in the present invention include distillation or "straight run" bitumen, precipitation bitumen, e.g. propane bitumen, oxidised or blown bitumen, naphthenic bitumen or mixtures thereof. Other bitumens that may be used include mixtures of one or more of these bitumens with extenders such as petroleum extracts, distillates or residues, and oils, or with elastomers, to make grades of bitumen known as PMBs (Polymer Modified Bitumens). An especially preferred polymer additive is styrene-butadiene-styrene (SBS) elastomer. Others are polybutadiene (PBD), ethylene vinyl acetate (EVA) and ethylene methacrylate (EMA).

The stability of asphalt with respect to de-icer compositions may be measured using the Marshall test, a well-known test developed in the 1940s ("The Marshall method for the design and control of bituminous paving mixtures", 1949, Marshall Consulting and Testing Laboratory, Mississippi). Marshall specimens are prepared according to part 30 of the European Committee for Standardization test EN 12697. The standard Marshall test is carried out according to EN 12697 part 34. In summary, test specimens of standard shape and size are immersed in a water bath at 60°C for one hour. A Marshall test is carried out within 40 seconds of removal of the specimen from the water bath. The sample is still substantially at 60°C. The applied load on the test specimen is at a constant rate of deformation of 50mm/min. The test continues until destruction. By means of this test the Marshall Stability is obtained.

The Retained Marshall Stability is expressed as a percentage and is defined in terms of the Marshall

Stability of the composition after an immersion process under set conditions (as defined later) as a percentage of the initial (absolute) Marshall Stability of the composition.

The use of the present invention is especially beneficial when applied to asphalt whose Marshall Stability (when not containing said surfactant) is reduced by at least 40%, more preferably by at least 50%, by immersion in de-icer solution under set conditions (as defined later).

The use of the present invention is especially beneficial when applied to asphalt whose Marshall Stability (when not containing said surfactant) is reduced by at least 20%, more preferably by at least 30%, by immersion in water under set conditions (as defined later).

In the use according to the present invention the asphalt (containing said surfactant) preferably has a Retained Marshall Stability of at least 55%, preferably at least 60%, following immersion in de-icer solution under set conditions (as defined later).

In the use according to the present invention the asphalt (containing said surfactant) preferably has a Retained Marshall Stability of at least 55%, preferably at least 75%, following immersion in water under set conditions (as defined later).

Preferably by the use of the present invention the ratio of the Retained Marshall Stability of the asphalt containing said surfactant over the corresponding asphalt not containing said surfactant, in each case following immersion in de-icer solution under the set conditions

(as defined later), is at least 1.2, more preferably at least 1.5.

Preferably by the use of the present invention the ratio of the Retained Marshall Stability of the asphalt containing said surfactant over the corresponding asphalt not containing said surfactant, in each case following immersion in water under the set conditions (as defined later), is at least 1.1, more preferably at least 1.3.

The set conditions in each case are 3 hours immersion in water or de-icer solution (namely 50% potassium formate in water), under vacuum conditions; followed by 48 hours' immersion at 60°C in the same liquid. Marshall testing is carried out immediately after removal from the solution, that is, substantially at 60°C. The immersion of specimens in water, firstly under vacuum and then for an extended period at an elevated temperature such as 40°C and 60°C, is known in the art and is described in standard protocols, for example Swedish test FAS 446-01 and AASHTO T283 (Resistance of Compacted Bituminous Mixtures to Moisture Induced Damage - American Association of State Highway and Transportation Officials).

Suitable surfactant additives able to achieve the effects referred to above include fatty acids, and fatty acid derivatives.

Suitable surfactant additives include polymeric or oligomeric compounds comprising an alkane backbone having long chain fatty acid residues appended by ester or amine linkages. Such compounds may be derived by the reaction of polyalcohols or polyamines with fatty acids.

A suitable fatty acid surfactant additive is a fatty acid having from 12 to 72 carbon atoms, preferably from 24 to 60 carbon atoms, and suitably 1 to 4, preferably 2 to 3, carboxylic acid groups. Preferably it is unsaturated. Preferably it is without chain branching. It preferably comprises at least one polymerised fatty acid selected from dimers and trimers of an unsaturated fatty acid, more preferably from dimers and trimers of an unsaturated C₁₂₋₂₄ fatty acid. Most preferably, the at least one polymerised fatty acid comprises at least one acid selected from dimers and trimers of an unsaturated C₁₈ fatty acid. Dimer acids (C₁₈-unsaturated dimeric fatty acids) are known and are assigned Chemistry Abstracts Registry Number CAS/61788-89-4. Trimer acids (C₁₈-unsaturated trimeric fatty acids) are also known (CAS No. 68930-90-6). Such polymerised fatty acids are described in Kirk-Othmer, "Encyclopedia of Chemical Technology", Vol. 7, pages 768 to 782, 3rd edition, and examples of preferred polymerised fatty acids are available under the 'PRIPOL' Trade Mark from Uniqema, Gouda, Holland.

Where the surfactant additive comprises at least one polymerised fatty acid selected from dimers and trimers of an unsaturated fatty acid, it is preferred that the w/w ratio of dimer acid to trimer acid is in the range of from 6:1 to 1:6.

In a preferred embodiment of the present invention, the w/w ratio of dimer acid to trimer acid is in the range of from 2:1 to 1:2, and in a particularly preferred aspect of this embodiment the w/w ratio of dimer acid to trimer acid is in the range of from 3:2 to 2:3. An example of a preferred polymerised fatty acid according to this embodiment is obtainable as 'PRIPOL 1045', from Uniqema.

In another preferred embodiment of the present invention, the w/w ratio of dimer acid to trimer acid is in the range of from 5:1 to 3:1. An example of a preferred polymerised fatty acid according to this embodiment is obtainable as 'PRIPOL 1017', from Uniqema.

In a further preferred embodiment of the present invention, the w/w ratio of dimer acid to trimer acid is in the range of from 1:3 to 1:5. An example of a preferred polymerised fatty acid according to this embodiment is obtainable as 'PRIPOL 1040', from Uniqema.

Further suitable surfactant additives able to achieve the effects referred to above include one or more amine or substituted amine compounds.

A preferred polymeric compound having amine linkages is a reaction product of tall oil fatty acids and polyalkylenepolyamines, especially polyethylenepolyamines, more preferably the product available under the Trade Mark 'WETFIX I', obtainable from Akzo Nobel, Stenungsund, Sweden, and having the CAS No. 68910-93-0.

Preferably the surfactant additive comprises up to 5% by weight of the bitumen component of the asphalt material, more preferably up to 4%, still more preferably up to 3%, yet more preferably up to 2%, yet more preferably up to 1%, yet more preferably 0.3 to 1%, and most preferably 0.5 to 1%.

In accordance with the present invention there is also provided the use of a surfactant for the purpose of improving the resistance of asphalt runways or roadways to degradation by de-icers and/or anti-icers, which de-icers and/or anti-icers preferably are alkali metal salts of organic acids, and optionally in addition for the purpose of improving the resistance of said asphalt runways or roadways to water.

The present invention will now be further described with reference to the following non-limiting Examples:

### Examples

Asphalt Marshall specimens were prepared in the laboratory using the formulation template set out in Table 1, prepared in standard manner, according to EN 12697-30.

**Table 1**

| Component | Content |
|---|---|
| Fine particulates (mixture of powdery fillers and sands), average particle size < 2mm | 43.9%w |
| Coarse particulates (gravel/stones), average size > 2mm | 56.1%w |
| Bitumen | 5.8 pha * |
| Voids content | 5%v/v |
| Bulk density | 2342 kg/m³ |

| | |
|---|---|
| * parts per hundred aggregate | |

For each of the examples below, the Marshall test was carried out using the method generally as described in EN 12697-34.

A first set of specimens (four or five specimens) were conditioned in water at 60°C for 1 hour and the Marshall Stability of the specimens was recorded. The average Marshall value was calculated. Another set of specimens of the same asphalt was then subjected to the relevant immersion process as outlined above and summarised in Table 2. The de-icer solution used was a commercial product containing potassium formate solution. It was a solution of about 50% potassium formate in water and contained a small percentage (<2%) of a corrosion inhibitor. The density was 1.33-1.37 g/cm³ and the pH was 10.5.

**Table 2**

| Test | Immersion conditions |
|---|---|
| Treatment with water | 3h vacuum (3kPa) in water; 48h in water at 60°C |
| Treatment with de-icer | 3h vacuum (3kPa) in de-icer; 48h in de-icer at 60°C |

The vacuum immersion step was carried out at 4°C.

The Marshall Stability for the second set of samples (four or five) was determined. The average value was calculated. Then, a calculation was made, of the average Marshall Stability of the second set, divided by the average Marshall Stability for the first set, to give the Retained Marshall Stability. This is expressed as a percentage.

The procedure was carried out on the following samples:
1. Bitumen A, which was a 70/100 pen bitumen, from Middle East crude.
2. Bitumen A, to which was added a fatty acid type additive ('PRIPOL 1045', ex. Uniqema), at a concentration of 1% (on weight of bitumen), prior to mixing with aggregate.
3. Bitumen A, to which was added an amine surfactant additive ('WETFIX I', ex. Akzo Nobel), at a concentration of 0.3% (on weight of bitumen), prior to mixing with aggregate.
4. Bitumen A, to which was added an amine type additive ('WETFIX I', ex. Akzo Nobel), at a concentration of 1% (on weight of bitumen), prior to mixing with aggregate.
5. Bitumen B, which was a naphthenic type 70/100 pen bitumen.
6. Bitumen B, to which was added a fatty acid type additive ('PRIPOL 1045', ex Uniqema), at a concentration of 1% (on weight of bitumen), prior to mixing with aggregate.

Table 3 shows the Retained Marshall Stabilities measured for each of these samples.

**Table 3**

| Sample No. | Binder | Direct Marshall test (KN) | Retained Marshall test - water RMS (%) | Retained Marshall test - de-icer RMS (%) |
|---|---|---|---|---|
| 1 | Bitumen A | 8.03 | 59 | 39 |
| 2 | Bitumen A + 1% fatty acid additive | 8.65 | 95 | 100 |
| 3 | Bitumen A + 0.3% amine additive | 8.75 | 81 | 61 |
| 4 | Bitumen A + 1% amine additive | 8.75 | 91 | 63 |
| 5 | Bitumen B | 8.08 | 80 | 51 |
| 6 | Bitumen B + 1% fatty acid additive | 8.44 | 91 | 100 |

It can be seen that addition of the fatty acid or amine derivative gave a large increase in resistance to degradation of the bitumen by the de-icer solution.

Background information which may be of assistance in understanding the practice of the present invention may be found in: *"*The quality of paving grade bitumen - a practical approach in terms of functional tests", G. van Gooswilligen, F. Th De Bats, T. Harrison, Proceedings of the 4th Eurobitume Symposium, pp 290-297, Madrid, October 1989; and *"*The influence of runway de-icing agents on the durability of asphalt concrete pavements for airfields", Y. Edwards and J. Aurstad, Road Material and Pavement Design, Vol. 1, No. 4/2000, pages 387-405.

## Claims

1. The use of a surfactant to improve the resistance of asphalt to degradation by a de-icer and/or an anti-icer.

2. The use according to claim 1 in addition to improve the resistance of said asphalt to degradation by water.

3. The use according to claim 1 or 2 wherein said surfactant comprises up to 5% w/w of the bitumen component of the asphalt.

4. The use according to claim 3 wherein said surfactant additive comprises up to 1% w/w of the bitumen component of the asphalt.

5. The use according to any one of the preceding claims wherein said surfactant is selected from fatty acids and fatty acid derivatives.

6. The use according to claim 5 wherein said surfactant comprises at least one polymerised fatty acid selected from dimers and trimers of an unsaturated fatty acid.

7. The use according to any one of claims 1 to 4 wherein said surfactant is one or more amine or substituted amine compounds.

8. The use according to claim 7 wherein said amine or substituted amine compound is a reaction product of tall oil fatty acids and polyalkylenepolyamines.

9. The use of a surfactant for the purpose of improving the resistance of asphalt runways or roadways to degradation by de-icers and/or anti-icers, which de-icers and/or anti-icers preferably are alkali metal salts of organic acids, and optionally in addition for the purpose of improving the resistance of said asphalt runways or roadways to water.

10. The use according to claim 9 wherein said de-icer and/or anti-icer is potassium formate and/or potassium acetate.

## Patentansprüche

1. Verwendung eines Tensids zur Verbesserung der Beständigkeit von Asphalt gegenüber Abbau durch ein Enteisungsmittel und/oder ein Vereisungsschutzmittel.

2. Verwendung nach Anspruch 1 zusätzlich zur Verbesserung der Beständigkeit des Asphalts gegenüber Abbau durch Wasser.

3. Verwendung nach Anspruch 1 oder 2, bei dem das Tensid bis zu 5 Ges.-% der Bitumenkomponente des Asphalts ausmacht.

4. Verwendung nach Anspruch 3, bei dem das Tensidadditiv bis zu 1 Ges.-% der Bitumenkomponente des Asphalts ausmacht.

5. Verwendung nach einem der vorhergehenden Ansprüche, bei dem das Tensid aus Fettsäuren und Fettsäurederivaten ausgewählt ist.

6. Verwendung nach Anspruch 5, bei dem das Tensid mindestens eine polymerisierte Fettsäure, die aus Dimeren und Trimeren einer ungesättigten Fettsäure ausgewählt sind, umfasst.

7. Verwendung nach einem der Ansprüche 1 bis 4, wobei es sich bei dem Tensid um eine oder mehrere Amin- oder substituierte Aminverbindungen handelt.

8. Verwendung nach Anspruch 7, wobei es sich bei der Amin- oder substituierten Aminverbindung um ein Reaktionsprodukt von Tallölfettsäuren und Polyalkylenpolyaminen handelt.

9. Verwendung eines Tensids zur Verbesserung der Beständigkeit von Asphaltstart- und -landebahnen oder -straßen gegenüber Abbau durch Enteisungsmittel und/oder Vereisungsschutzmittel, wobei es sich bei den Enteisungsmitteln und/oder Vereisungsschutzmitteln vorzugsweise um Alkalimetallsalze organischer Säuren handelt, und gegebenenfalls zusätzlich zur Verbesserung der Beständigkeit von Asphaltstart- und -landebahnen oder -straßen gegenüber Wasser.

10. Verwendung nach Anspruch 9, wobei es sich bei dem Enteisungsmittel und/oder Vereisungsschutzmittel um Kaliumformiat und/oder Kaliumacetat handelt.

## Revendications

1. Utilisation d'un tensioactif pour améliorer la résistance de l'asphalte à la dégradation par un dégivrant et/ou un antigivrant.

2. Utilisation selon la revendication 1 pour améliorer en outre la résistance dudit asphalte à la dégradation par l'eau.

3. Utilisation selon la revendication 1 ou 2 dans laquelle ledit tensioactif constitue jusqu'à 5 % m/m du composant bitumineux de l'asphalte.

4. Utilisation selon la revendication 3 dans laquelle ledit additif tensioactif constitue jusqu'à 1 % m/m du composant bitumineux de l'asphalte.

5. Utilisation selon l'une quelconque des revendications précédentes dans laquelle ledit tensioactif est choisi parmi des acides gras et des dérivés d'acide gras.

6. Utilisation selon la revendication 5 dans laquelle ledit tensioactif comprend au moins un acide gras polymérisé choisi parmi des dimères et des trimères d'un acide gras insaturé.

7. Utilisation selon l'une quelconque des revendications 1 à 4 dans laquelle ledit tensioactif est un ou plusieurs composés aminés ou aminés substitués.

8. Utilisation selon la revendication 7 dans laquelle ledit composé aminé ou aminé substitué est un produit de réaction d'acides gras de tallöl et de polyalkylènepolyamines.

9. Utilisation d'un tensioactif dans le but d'améliorer la résistance de pistes ou de chaussées à la dégradation par des dégivrants et/ou antigivrants, lesdits dégivrants et/ou antigivrants étant de préférence des sels de métal alcalin d'acides organiques, et facultativement en outre, dans le but d'améliorer la résistance desdites pistes ou chaussées à l'eau.

10. Utilisation selon la revendication 9 dans laquelle ledit dégivrant et/ou antigivrant est le formiate de potassium et/ou l'acétate de potassium.
